# FASCICULE DE BREVET EUROPEEN

(11) **EP 2 742 836 B1**
(45) Date de publication et mention de la délivrance du brevet: **10.10.2018**
(21) Numéro de dépôt: 13196548.5
(22) Date de dépôt: 10.12.2013
(51) Int. Cl.: A47J 43/07, B01F 7/00

(54) **Outil de travail rotatif ajouré pour appareil électroménager pour réaliser des préparations alimentaires et/ou cosmétiques**
Durchbrochenes, drehbares Arbeitsgerät für Elektrohaushaltsgerät zur Herstellung von Nahrungsmittel- und/oder Kosmetikzubereitungen
Perforated rotary work tool for a household appliance for manufacturing food and/or cosmetic preparations

(30) Priorité: 14.12.2012 FR 1262107
(43) Date de publication de la demande: 18.06.2014
(73) Titulaire: SEB S.A., 69130 Ecully (FR)
(72) Inventeur: Bourgeois-Jacquet, Jean-Marie, 21850 SAINT-APOLLINAIRE (FR); Ferrer, Florent, 65310 LALOUBERE (FR)
(74) Mandataire: Cémeli, Eric Philippe Laurent

(56) Documents cités:
- EP-A1- 2 353 707
- WO-A1-2010/141012
- FR-A- 946 941
- US-A- 1 001 949
- US-A- 2 086 858
- US-A- 5 090 816

## Description

La présente invention concerne le domaine technique des appareils électroménagers pour réaliser des préparations alimentaires et/ou cosmétiques, comportant un outil de travail entraîné en rotation dans un récipient de travail.

La présente invention concerne plus particulièrement les outils de travail pour mélanger, émulsionner, homogénéiser et faire foisonner des préparations alimentaires et/ou cosmétiques, ainsi que les récipients de travail d'appareils électroménagers et les appareils électroménagers comportant un tel outil de travail rotatif.

Le document EP 1 329 182 divulgue un outil de travail rotatif comportant une lame perforée allongée présentant un bord d'attaque incurvé fuyant, la largeur de chaque lame diminuant entre le bord d'attaque et le bord de fuite en direction d'une extrémité pointue de la lame.

Le document CN201602656U divulgue un outil de travail rotatif comportant au moins deux lames perforées allongées s'étendant autour d'un axe de rotation, dans lequel la largeur de chaque lame diminue entre le bord d'attaque et le bord de fuite en direction de l'extrémité libre de la lame, et l'extrémité libre du bord d'attaque de chaque lame forme un angle saillant avec le bord de fuite.

Un appareil selon le préambule de la revendication 1 est connu du document US 5 090 816.

Un inconvénient de ces réalisations réside dans la surface relative réduite des ouvertures de ces lames, qui limite les possibilités de foisonnement des ingrédients de la préparation. Un autre inconvénient de ces réalisations réside dans le caractère relativement agressif de ces lames, du fait de la présence de pointes ou d'angles saillants.

Un but de la présente invention est de proposer un outil de travail rotatif à lames perforées allongées, qui présentent une surface de perforations importante, tout en offrant une bonne résistance.

Un autre but de la présente invention est de proposer un outil de travail rotatif à lames perforées allongées, qui présentent une surface de perforations importante, et dont les zones agressives sont minimisées.

Ces buts sont atteints avec un outil de travail rotatif d'appareil électroménager pour réaliser des préparations alimentaires et/ou cosmétiques, comportant au moins deux lames perforées allongées s'étendant autour d'un axe de rotation, chaque lame perforée allongée présentant un bord d'attaque et un bord de fuite, chaque lame perforée allongée présentant une extrémité libre arrondie reliant le bord d'attaque au bord de fuite, et chaque lame perforée allongée présentant une seule perforation d'extrémité s'étendant partiellement au-delà d'une portion divergente de ladite lame perforée allongée, la perforation d'extrémité de chaque lame perforée allongée s'étendant à la fois dans la portion divergente et au-delà de la portion divergente en direction de l'extrémité libre arrondie, ladite portion divergente présentant une largeur croissante entre le bord d'attaque et le bord de fuite en direction de l'extrémité libre arrondie, du fait que chaque lame perforée allongée présente une seule perforation complémentaire s'étendant entièrement dans la portion divergente, que chaque lame perforée allongée est allongée selon une direction radiale par rapport à l'axe de rotation, et que ladite perforation complémentaire est agencée entre l'axe de rotation et la perforation d'extrémité. Cette disposition permet d'augmenter la surface de perforations et de diminuer encore les masses tournantes. Cette disposition contribue également au foisonnement de la préparation. Chacune des lames perforées allongées est ainsi dépourvue de pointes ou d'angles saillants susceptibles de créer des zones fragiles ou agressives. De plus les masses tournantes éloignées de l'axe de rotation sont réduites tout en permettant une taille de perforations importante qui facilite le foisonnement des ingrédients mélangés lors de la réalisation de la préparation. Cette disposition contribue également à diminuer les vibrations. Avantageusement encore, la perforation d'extrémité de chaque lame perforée allongée s'étend en direction de l'axe de rotation sur une longueur supérieure à la plus petite largeur de ladite lame perforée allongée dans la zone comprise entre l'axe de rotation et la largeur maximale de ladite lame perforée allongée. Cette disposition permet encore d'augmenter la taille des perforations et de diminuer encore les masses tournantes.

Avantageusement encore, la perforation d'extrémité de chaque lame perforée allongée s'étend transversalement sur une largeur supérieure à la plus petite largeur de ladite lame perforée allongée entre l'axe de rotation et la largeur maximale de ladite lame perforée allongée. Cette disposition permet aussi d'augmenter la taille des perforations et de diminuer encore les masses tournantes.

Selon une forme de réalisation avantageuse facilitant la réalisation des lames perforées allongées et contribuant à leur résistance, chaque perforation d'extrémité présente une géométrie arrondie.

Avantageusement encore, au moins l'extrémité libre arrondie d'au moins l'une des lames perforées allongées est inclinée et/ou courbée par rapport à un plan perpendiculaire à l'axe de rotation, de préférence avec un angle compris entre 5 et 15° par rapport audit plan. Cette disposition permet d'améliorer le mélange des ingrédients de la préparation.

Selon une forme de réalisation avantageuse, l'outil de travail rotatif comporte entre deux et quatres lames perforées allongées réparties autour de l'axe de rotation. Une telle disposition est bien adaptée au volume des récipients de travail d'appareils électroménagers pour réaliser des préparations alimentaires et/ou cosmétiques.

Avantageusement alors, les lames perforées allongées sont issues d'une même pièce métallique. Cette disposition permet d'optimiser la résistance mécanique de l'outil de travail rotatif.

Selon une forme de réalisation préférée, l'outil de travail rotatif comporte deux lames perforées allongées opposées de part et d'autre de l'axe de rotation. Cette disposition permet de laisser un espace accessible entre les lames perforées allongées pour récupérer facilement la préparation réalisée.

Avantageusement alors, l'outil de travail rotatif présente une forme en 8. Une telle géométrie permet d'obtenir une bonne résistance mécanique des lames perforées allongées, avec une surface de perforations importante.

Avantageusement encore, les deux lames perforées allongées opposées sont inclinées de manière opposée par rapport à un plan perpendiculaire à l'axe de rotation, de préférence avec un angle compris entre 5 et 15° par rapport audit plan. Cette disposition permet d'améliorer encore le mélange des ingrédients de la préparation, en limitant les vibrations excessives lors de la rotation de l'outil de travail rotatif.

Selon une forme de réalisation avantageuse facilitant la réalisation des lames perforées allongées et contribuant à leur résistance, chaque perforation complémentaire présente une géométrie arrondie.

Ces buts sont atteints également avec un récipient de travail pour appareil électroménager pour réaliser des préparations alimentaires et/ou cosmétiques, comportant un fond dans lequel est monté un axe de support mobile en rotation portant un outil de travail rotatif, dans lequel l'outil de travail rotatif est conforme à l'une au moins des caractéristiques précitées.

Ces buts sont atteints également avec un appareil électroménager pour réaliser des préparations alimentaires et/ou cosmétiques, comportant un boîtier supportant un récipient de travail recevant un outil de travail rotatif, le boîtier renfermant un moteur pour l'entrainement de l'outil de travail rotatif, dans lequel l'outil de travail rotatif est conforme à l'une au moins des caractéristiques précitées.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un appareil électroménager pour réaliser des préparations alimentaires et/ou cosmétiques,
- la figure 2 est une vue en élévation et en coupe de l'appareil électroménager pour réaliser des préparations alimentaires et/ou cosmétiques illustré sur la figure 1, comportant un outil de travail rotatif selon l'invention,
- la figure 3 est une vue de dessus de l'outil de travail rotatif illustré sur la figure 2,
- la figure 4 est une vue en perspective de dessus de l'outil de travail rotatif illustré sur les figures 2 et 3, monté sur un axe de support,
- la figure 5 est une vue en élévation de l'outil de travail rotatif illustré sur les figures 2 à 4, monté sur l'axe de support.

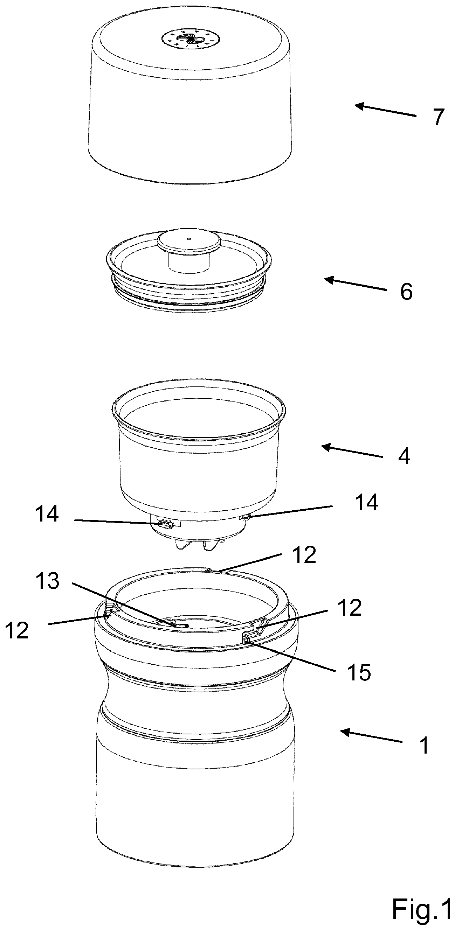

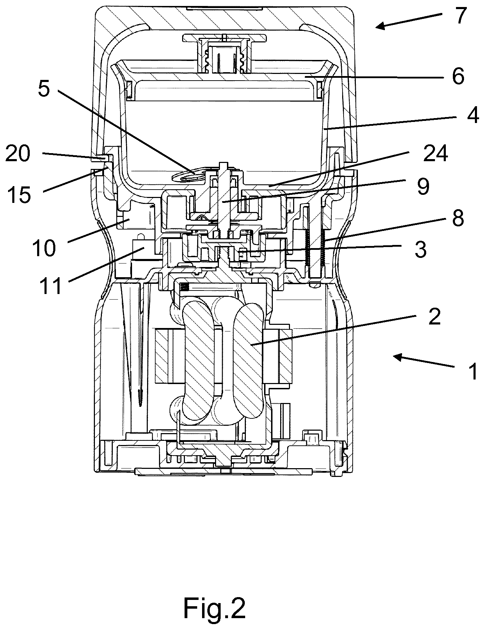

L'appareil électroménager pour réaliser des préparations alimentaires et/ou cosmétiques illustré sur les figures 1 et 2 comporte un boîtier 1 supportant un récipient de travail 4 recevant un outil de travail rotatif 5. Le boîtier 1 renferme un moteur 2 pour l'entraînement de l'outil de travail rotatif 5. Un couvercle 7 amovible est monté sur le boîtier 1.

Plus particulièrement dans l'exemple de réalisation illustré sur les figures, le récipient de travail 4 est amovible par rapport au boîtier 1. Le récipient de travail 4 est verrouillé par baïonnette sur le boîtier 1 au moyen de tenons externes 14 engagés dans des encoches internes 13 du boîtier 1. L'outil de travail rotatif 5 est solidaire du récipient de travail 4. Le récipient de travail 4 comporte un fond 24 dans lequel est monté un axe de support 9 mobile en rotation et portant l'outil de travail rotatif 5. L'outil de travail rotatif 5 est par exemple serti sur l'axe de support 9. Le boîtier 1 présente un organe d'entrainement supérieur 3 pour entraîner l'outil de travail rotatif 5, par l'intermédiaire de l'extrémité inférieure de l'axe de support 9. Un couvercle interne d'étanchéité 6 est prévu pour fermer le récipient de travail 4.

Le couvercle 7 comporte au moins un tenon interne 20 pour commander le fonctionnement du moteur 2 lorsque le couvercle 7 coiffe le récipient de travail 4, tel que visible sur la figure 2.

Dans l'exemple de réalisation illustré sur les figures, le couvercle 7 présente une géométrie de révolution et comporte trois tenons internes 20 agencés à 120° les uns des autres. Les tenons internes 20 peuvent être engagés dans des encoches externes 12 du boîtier 1, pour verrouiller le couvercle 7 par baïonnette sur le boîtier 1 après un mouvement de rotation. Les tenons internes 20 engagés au fond des encoches externes 12 reposent sur des organes de commande 15.

Le couvercle 7 est mobile sur le boîtier 1 entre une position de repos, dans laquelle le moteur 2 est à l'arrêt, et une position de commande, dans laquelle le moteur 2 est en fonctionnement.

Dans l'exemple de réalisation illustré sur les figures, la position de repos du couvercle 7 est une position relevée et la position de commande du couvercle 7 est une position abaissée. Les organes de commande 15 sont mobiles verticalement par rapport au boîtier 1 et appartiennent à une couronne 10 agencée dans le boîtier 1. La couronne 10 est montée mobile contre au moins un élément de rappel élastique 8 et peut être déplacée par appui sur le couvercle 7 pour actionner un interrupteur 11 commandant la mise en marche du moteur 2.

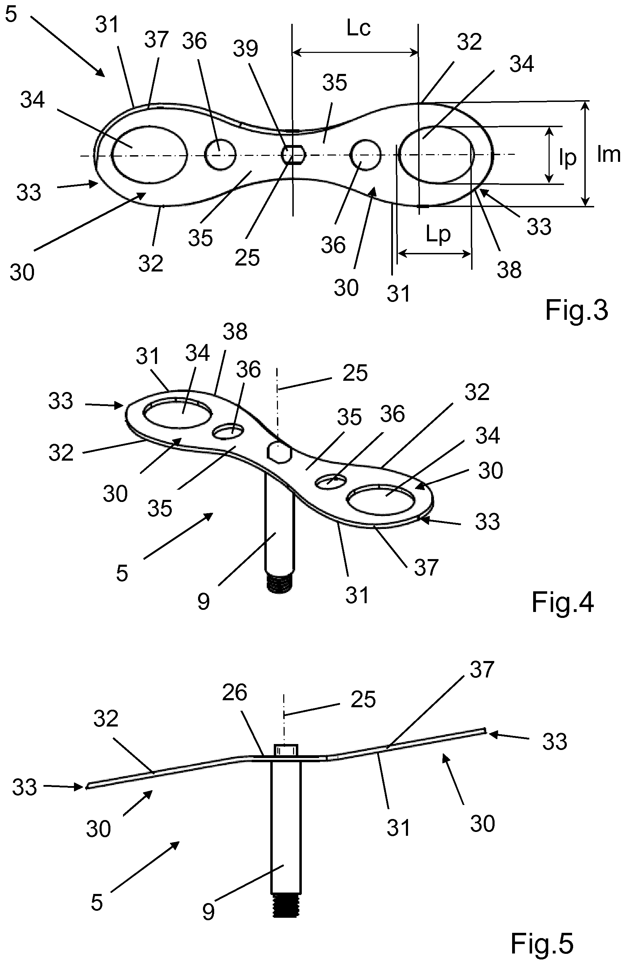

L'outil de travail rotatif 5 illustré sur les figures 3 à 5 comporte deux lames perforées allongées 30 opposées s'étendant autour d'un axe de rotation 25. L'outil de travail rotatif 5 serti sur l'axe de support 9 comporte dans sa partie médiane une ouverture oblongue 39 pour le passage d'une partie supérieure de l'axe de support 9.

Chaque lame perforée allongée 30 présente un bord d'attaque 31 et un bord de fuite 32. Chaque lame perforée allongée 30 présente une extrémité libre arrondie 33 reliant le bord d'attaque 31 au bord de fuite 32. Les bords d'attaque 31 sont ainsi fuyants, ce qui permet d'obtenir un effet sabre favorable à la découpe des ingrédients.

Tel que mieux visible sur la figure 3, chaque lame perforée allongée 30 présente une perforation d'extrémité 34 s'étendant au moins partiellement au-delà d'une portion divergente 35 de ladite lame perforée allongée 30. La portion divergente 35 présente une largeur croissante entre le bord d'attaque 31 et le bord de fuite 32 en direction de l'extrémité libre arrondie 33.

L'extrémité libre arrondie 33 combinée à la perforation d'extrémité 34 permet de relier le bord d'attaque 31 au bord de fuite 32 par une section dépourvue d'angle saillant, ce qui contribue à une bonne solidité de la partie terminale des lames perforées allongées 30 et limite les risques d'ébréchage, tout en allégeant leur masse.

Plus particulièrement dans l'exemple de réalisation illustré sur les figures, la plus petite largeur de chaque lame perforée allongée 30 est située au niveau de l'axe de rotation 25. La portion divergente 35 de chaque lame perforée allongée 30 s'étend sur une longueur Lc entre l'axe de rotation 25 et la section de la lame perforée allongée 30 présentant la largeur maximale lm. La largeur maximale lm de chaque lame perforée allongée 30 est agencée entre l'extrémité de ladite lame perforée allongée 30 opposée à l'axe de rotation 25 et la mi-longueur de ladite lame perforée allongée 30 à partir de l'axe de rotation 25. Chaque extrémité libre arrondie 33 s'étend à partir de la largeur maximale lm de chaque lame perforée allongée 30 et forme ainsi une portion convergente de ladite lame perforée allongée 30. L'outil de travail rotatif 5 présente ainsi une forme en 8.

Chaque perforation d'extrémité 34 s'étend à la fois dans la portion divergente 35 et au-delà de la portion divergente 35 en direction de l'extrémité libre arrondie 33. Chaque perforation d'extrémité 34 s'étend transversalement sur une largeur lp supérieure à la plus petite largeur de la lame perforée allongée 30 entre l'axe de rotation 25 et la largeur maximale lm de ladite lame perforée allongée 30. Chaque perforation d'extrémité 34 s'étend en direction de l'axe de rotation 25 sur une longueur Lp supérieure à la plus petite largeur de la lame perforée allongée 30 dans la zone comprise entre l'axe de rotation 25 et la largeur maximale lm de ladite lame perforée allongée 30.

Tel que bien visible sur les figures 3 et 4, chaque lame perforée allongée 30 présente une seule perforation d'extrémité 34 s'étendant partiellement au-delà de la portion divergente 35 de ladite lame perforée allongée 30.

Tel que bien visible sur la figure 4, chaque lame perforée allongée 30 est allongée selon une direction radiale par rapport à l'axe de rotation 25.

Chaque perforation d'extrémité 34 présente une géométrie elliptique avec un petit axe s'étendant selon la largeur de la lame perforée allongée 30. De plus, chaque lame perforée allongée 30 présente une perforation complémentaire 36 s'étendant dans la portion divergente 35. Chaque perforation complémentaire 36 présente une géométrie circulaire. Ainsi chaque perforation d'extrémité 34 et chaque perforation complémentaire 36 présente une géométrie arrondie.

Tel que bien visible sur les figures 3 et 4, chaque perforation complémentaire 36 s'étend entièrement dans la portion divergente 35.

Les lames perforées allongées 30 sont issues d'une même pièce métallique, avantageusement réalisée en acier inoxydable, si désiré avec traitement de surface et/ou revêtement. L'épaisseur des lames perforées allongées est par exemple de l'ordre de 1 mm.

Chacune des lames perforées allongées 30 présente une périphérie affutée 37, 38 s'étendant avantageusement au moins sur le bord d'attaque 31. Tel que visible sur les figures 3 et 4, la périphérie affutée 37, 38 se prolonge dans les extrémités libres arrondies 33 jusqu'aux bords de fuite 32.

Tel que visible sur la figure 5, les deux lames perforées allongées 30 opposées sont inclinées de manière opposée par rapport à la perpendiculaire à l'axe de rotation 25. L'outil de travail rotatif 5 présente une portion centrale 26 sensiblement perpendiculaire à l'axe de rotation 25, prolongée de part et d'autre par les lames perforées allongées 30 inclinées. L'angle d'inclinaison des lames perforées allongées 30 par rapport au plan perpendiculaire à l'axe de rotation 25 est avantageusement compris entre 5 et 15°, et est par exemple de l'ordre de 10°, tel que représenté sur la figure 5.

La première des lames perforées allongées 30 est relevée par rapport à l'axe de support 9 et présente une périphérie affutée 37 avec le bord d'attaque 31 formé par la face inférieure de ladite lame perforée allongée 30. La deuxième des lames perforées allongées 30 est inclinée dans l'autre sens par rapport à l'axe de support 9 et présente une périphérie affutée 38 avec le bord d'attaque 31 formé par la face supérieure de ladite lame perforée allongée 30.

Le fonctionnement de la présente invention est le suivant.

L'utilisateur met en place le récipient de travail 4 sur le boîtier 1, ajoute les ingrédients dans le récipient de travail 4, ferme le récipient de travail 4 avec le couvercle interne d'étanchéité 6, positionne le couvercle 7 pour coiffer le récipient de travail 4, puis met en marche l'appareil pour mélanger, broyer, et émulsionner les ingrédients. Les perforations d'extrémité 34 favorisent le mélange des ingrédients et le foisonnement de la préparation, en permettant une rotation à vitesse élevée sans vibrations excessives. Une texture homogène et aérée peut ainsi être obtenue rapidement avec un appareil agréable à utiliser. L'absence de parties saillantes sur l'outil de travail rotatif 5 favorise par ailleurs la récupération de la préparation obtenue avec une spatule en limitant les risques de dégradation de ladite spatule ou de l'outil de travail rotatif 5, et contribue également à la robustesse de l'outil de travail rotatif 5.

A titre de variante, l'outil de travail rotatif 5 ne comporte pas nécessairement deux lames perforées allongées 30 opposées. L'outil de travail rotatif 5 peut comporter au moins deux lames perforées allongées 30 s'étendant autour de l'axe de rotation 25, et de préférence entre deux et quatre lames perforées allongées 30 réparties autour de l'axe de rotation 25 de l'outil de travail rotatif 5.

A titre de variante, les lames perforées allongées 30 ne sont pas nécessairement planes et inclinées par rapport à un plan perpendiculaire à l'axe de rotation 25. Si désiré au moins l'extrémité libre arrondie 33 d'au moins l'une des lames perforées allongées 30 peut être inclinée et/ou courbée par rapport à un plan perpendiculaire à l'axe de rotation 25, de préférence avec un angle compris entre 5 et 15° par rapport audit plan.

A titre de variante, l'appareil n'est pas nécessairement commandé par appui sur le couvercle 7, mais peut par exemple comporter un bouton de commande agencé sur le boîtier 1.

A titre de variante, l'outil de travail rotatif 5 peut être monté amovible dans le récipient de travail 4.

A titre de variante, le récipient de travail 4 n'est pas nécessairement monté amovible sur le boîtier 1.

La présente invention n'est nullement limitée à l'exemple de réalisation décrit et à ses variantes, mais englobe de nombreuses modifications dans le cadre des revendications.

## Revendications

1. Outil de travail rotatif (5) d'appareil électroménager pour réaliser des préparations alimentaires et/ou cosmétiques, comportant au moins deux lames perforées allongées (30) s'étendant autour d'un axe de rotation (25), chaque lame perforée allongée (30) présentant un bord d'attaque (31) et un bord de fuite (32), **caractérisé en ce que** chaque lame perforée allongée (30) présente une extrémité libre arrondie (33) reliant le bord d'attaque (31) au bord de fuite (32), et **en ce que** chaque lame perforée allongée (30) présente une seule perforation d'extrémité (34) s'étendant partiellement au-delà d'une portion divergente (35) de ladite lame perforée allongée (30), la perforation d'extrémité (34) de chaque lame perforée allongée (30) s'étendant à la fois dans la portion divergente (35) et au-delà de la portion divergente (35) en direction de l'extrémité libre arrondie (33), ladite portion divergente (35) présentant une largeur croissante entre le bord d'attaque (31) et le bord de fuite (32) en direction de l'extrémité libre arrondie (33), **caractérisé en ce que** chaque lame perforée allongée (30) présente une seule perforation complémentaire (36) s'étendant entièrement dans la portion divergente (35), **en ce que** chaque lame perforée allongée (30) est allongée selon une direction radiale par rapport à l'axe de rotation (25), et **en ce que** ladite perforation complémentaire (36) est agencée entre l'axe de rotation (25) et la perforation d'extrémité (34).

2. Outil de travail rotatif (5) selon la revendication 1, **caractérisé en ce que** la perforation d'extrémité (34) de chaque lame perforée allongée (30) s'étend en direction de l'axe de rotation (25) sur une longueur (Lp) supérieure à la plus petite largeur de ladite lame perforée allongée (30) dans la zone comprise entre l'axe de rotation (25) et la largeur maximale (lm) de ladite lame perforée allongée (30).

3. Outil de travail rotatif (5) selon l'une des revendications 1 ou 2, **caractérisé en ce que** la perforation d'extrémité (34) de chaque lame perforée allongée (30) s'étend transversalement sur une largeur (lp) supérieure à la plus petite largeur de ladite lame perforée allongée (30) entre l'axe de rotation (25) et la largeur maximale (lm) de ladite lame perforée allongée (30).

4. Outil de travail rotatif (5) selon l'une des revendications 1 à 3, **caractérisé en ce que** chaque perforation d'extrémité (34) présente une géométrie arrondie.

5. Outil de travail rotatif (5) selon l'une des revendications 1 à 4, **caractérisé en ce qu'**au moins l'extrémité libre arrondie (33) d'au moins l'une des lames perforées allongées (30) est inclinée et/ou courbée par rapport à un plan perpendiculaire à l'axe de rotation (25), de préférence avec un angle compris entre 5 et 15° par rapport audit plan.

6. Outil de travail rotatif (5) selon l'une des revendications 1 à 5, **caractérisé en ce qu'**il comporte entre deux et quatres lames perforées allongées (30) réparties autour de l'axe de rotation (25).

7. Outil de travail rotatif (5) selon l'une des revendications 1 à 6, **caractérisé en ce que** les lames perforées allongées (30) sont issues d'une même pièce métallique.

8. Outil de travail rotatif (5) selon l'une des revendications 1 à 7, **caractérisé en ce qu'**il comporte deux lames perforées allongées (30) opposées de part et d'autre de l'axe de rotation (25).

9. Outil de travail rotatif (5) selon la revendication 8, **caractérisé en ce qu'**il présente une forme en 8.

10. Outil de travail rotatif (5) selon l'une des revendications 8 ou 9, **caractérisé en ce que** les deux lames perforées allongées (30) opposées sont inclinées de manière opposée par rapport à un plan perpendiculaire à l'axe de rotation (25).

11. Outil de travail rotatif (5) selon l'une des revendications 8 ou 9, **caractérisé en ce que** les deux lames perforées allongées (30) opposées sont inclinées de manière opposée par rapport à un plan perpendiculaire à l'axe de rotation (25) avec un angle compris entre 5 et 15° par rapport audit plan.

12. Outil de travail rotatif (5) selon l'une des revendications 1 à 11, **caractérisé en ce que** chaque perforation complémentaire (36) présente une géométrie arrondie.

13. Récipient de travail (4) d'appareil électroménager pour réaliser des préparations alimentaires et/ou cosmétiques, comportant un fond (24) dans lequel est monté un axe de support (9) mobile en rotation et portant un outil de travail rotatif (5), **caractérisé en ce que** l'outil de travail rotatif (5) est conforme à l'une des revendications 1 à 12.

14. Appareil électroménager pour réaliser des préparations alimentaires et/ou cosmétiques, comportant un boîtier (1) supportant un récipient de travail (4) recevant un outil de travail rotatif (5), le boîtier (1) renfermant un moteur (2) pour l'entrainement de l'outil de travail rotatif (5), **caractérisé en ce que** l'outil de travail rotatif (5) est conforme à l'une des revendications 1 à 12.

## Patentansprüche

1. Drehbares Arbeitsgerät (5) für ein elektrisches Haushaltsgerät zur Herstellung von Lebensmittel- und/oder Kosmetikzubereitungen, das aus mindestens zwei sich um eine Drehachse (25) erstreckenden länglichen perforierten Klingen (30) besteht, wobei jede längliche perforierte Klinge (30) eine Vorderkante (31) und eine Hinterkante (32) aufweist, **dadurch gekennzeichnet, dass** jede längliche perforierte Klinge (30) ein rundliches freies Ende (33) aufweist, das die Vorderkante (31) mit der Hinterkante (32) verbindet, und dass jede längliche perforierte Klinge (30) eine einzelne Endperforation (34) aufweist, die sich teilweise über einen divergierenden Abschnitt (35) der länglichen perforierten Klinge (30) hinaus erstreckt, wobei sich die Endperforation (34) jeder länglichen perforierten Klinge (30) sowohl in dem divergierenden Abschnitt (35) als auch über den divergierenden Abschnitt (35) hinaus zu dem rundlichen freien Ende (33) erstreckt, wobei der divergierende Abschnitt (35) eine zunehmende Breite zwischen der Vorderkante (31) und der Hinterkante (32) zu dem rundlichen freien Ende (33) hin aufweist, **dadurch gekennzeichnet, dass** jede längliche perforierte Klinge (30) eine einzige komplementäre Perforation (36) aufweist, die sich vollständig in den divergierenden Abschnitt (35) erstreckt, dass jede längliche perforierte Klinge (30) in einer radialen Richtung in Bezug auf die Drehachse (25) verlängert ist und dass die komplementäre Perforation (36) zwischen der Drehachse (25) und der Endperforation (34) angeordnet ist.

2. Drehbares Arbeitsgerät (5) nach Anspruch 1, **dadurch gekennzeichnet, dass** sich die Endperforation (34) jeder länglichen perforierten Klinge (30) über eine Länge (lp), die größer ist als die kleinste Breite der länglichen perforierten Klinge (30), im Bereich zwischen der Drehachse (25) und der größten Breite (lm) der länglichen perforierten Klinge (30) zur Drehachse (25) hin erstreckt.

3. Drehbares Arbeitsgerät (5) nach Anspruch 1 oder 2, **dadurch gekennzeichnet, dass** sich die Endperforation (34) jeder länglichen perforierten Klinge (30) quer über eine Breite (lp) erstreckt, die größer ist als die kleinste Breite der länglichen perforierten Klinge (30) zwischen der Drehachse (25) und der maximalen Breite (lm) der länglichen perforierten Klinge (30).

4. Drehbares Arbeitsgerät (5) nach einem der Ansprüche 1 bis 3, **dadurch gekennzeichnet, dass** jede Endperforation (34) eine rundliche Geometrie aufweist.

5. Drehbares Arbeitsgerät (5) nach einem der Ansprüche 1 bis 4, **dadurch gekennzeichnet, dass** mindestens das rundliche freie Ende (33) von mindestens einer der länglichen perforierten Klingen (30) in Bezug auf eine senkrecht zur Drehachse (25) stehende Ebene geneigt und/oder gekrümmt ist, vorzugsweise in einem Winkel zwischen 5 und 15 ° zu dieser Ebene.

6. Drehbares Arbeitsgerät (5) nach einem der Ansprüche 1 bis 5, **dadurch gekennzeichnet, dass** es aus zwischen zwei und vier um die Drehachse (25) verteilten länglichen perforierten Klingen (30) besteht.

7. Drehbares Arbeitsgerät (5) nach einem der Ansprüche 1 bis 6, **dadurch gekennzeichnet, dass** die länglichen perforierten Klingen (30) aus einem einzigen Metallstück gefertigt sind.

8. Drehbares Arbeitsgerät (5) nach einem der Ansprüche 1 bis 7, **dadurch gekennzeichnet, dass** es aus zwei länglichen perforierten Klingen (30) besteht, die einander auf beiden Seiten der Drehachse (25) gegenüberliegen.

9. Drehbares Arbeitsgerät (5) nach Anspruch 8, **dadurch gekennzeichnet, dass** es die Form einer 8 aufweist.

10. Drehbares Arbeitsgerät (5) nach einem der Ansprüche 8 oder 9, **dadurch gekennzeichnet, dass** die beiden einander gegenüberliegenden länglichen perforierten Klingen (30) in Bezug auf eine senkrecht zur Drehachse (25) stehende Ebene in entgegengesetzter Richtung geneigt sind.

11. Drehbares Arbeitsgerät (5) nach einem der Ansprüche 8 oder 9, **dadurch gekennzeichnet, dass** die beiden einander gegenüberliegenden länglichen perforierten Klingen (30) in Bezug auf eine senkrecht zur Drehachse (25) stehende Ebene in entgegengesetzter Richtung geneigt sind, vorzugsweise in einem Winkel zwischen 5 und 15 ° zu dieser Ebene.

12. Drehbares Arbeitsgerät (5) nach einem der Ansprüche 1 bis 11, **dadurch gekennzeichnet, dass** jede komplementäre Perforation (36) eine rundliche Geometrie aufweist.

13. Arbeitsbehälter (4) eines elektrischen Haushaltsgerätes zur Herstellung von Lebensmittel- und/oder Kosmetikzubereitungen, das aus einem Boden (24) besteht, in dem eine drehbare Stützachse (9) eingesetzt ist, die ein drehbares Arbeitsgerät (5) trägt, **dadurch gekennzeichnet, dass** das drehbare Arbeitsgerät (5) einem der Ansprüche 1 bis 12 entspricht.

14. Elektrisches Haushaltsgerät zur Herstellung von Lebensmittel- und/oder Kosmetikzubereitungen, das aus einem Gehäuse (1) besteht, das einen Arbeitsbehälter (4) trägt, der ein drehbares Arbeitsgerät (5) aufnimmt, wobei das Gehäuse (1) einen Motor (2) zum Antrieb des drehbaren Arbeitsgeräts (5) enthält, **dadurch gekennzeichnet, dass** das drehbare Arbeitsgerät (5) einem der Ansprüche 1 bis 12 entspricht.

## Claims

1. Rotating household electrical appliance work tool (5) to carry out food and/or cosmetic preparations, comprising at least two perforated elongated blades (30) extending around a rotation axis (25), each perforated elongated blade (30) having a leading edge (31) and a trailing edge (32), **characterised in that** each perforated elongated blade (30) has a rounded free end (33) connecting the leading edge (31) to the trailing edge (32), and **in that** each perforated elongated blade (30) has one single end perforation (34) extending partially beyond a diverging portion (35) of said perforated elongated blade (30), the end perforation (34) of each perforated elongated blade (30) extending both into the diverging portion (35) and beyond the diverging portion (35) in the direction of the rounded free end (33), said diverging portion (35) having a width increasing between the leading edge (31) and the trailing edge (32) in the direction of the rounded free end (33), **characterised in that** each perforated elongated blade (30) has one single additional perforation (36) extending fully into the diverging portion (35), **in that** each perforated elongated blade (30) is elongated along a radial direction with respect to the rotation axis (25), and **in that** said additional perforation (36) is arranged between the rotation axis (25) and the end perforation (34).

2. Rotating work tool (5) according to claim 1, **characterised in that** the end perforation (34) of each perforated elongated blade (30) extends in the direction of the rotation axis (25) over a length (Lp) greater than the narrowest width of said perforated elongated blade (30) into the zone comprised between the rotation axis (25) and the maximum width (lm) of said perforated elongated blade (30).

3. Rotating work tool (5) according to one of claims 1 or 2, **characterised in that** the end perforation (34) of each perforated elongated blade (30) extends transversally over a length (lp) greater than the narrowest width of said perforated elongated blade (30) between the rotation axis (25) and the maximum width (lm) of said perforated elongated blade (30).

4. Rotating work tool (5) according to one of claims 1 to 3, **characterised in that** each end perforation (34) has a rounded geometry.

5. Rotating work tool (5) according to one of claims 1 to 4, **characterised in that** at least the rounded free end (33) of at least one of the perforated elongated blades (30) is tilted and/or curved with respect to a plane perpendicular to the rotation axis (25), preferably with an angle of between 5 and 15° with respect to said plane.

6. Rotating work tool (5) according to one of claims 1 to 5, **characterised in that** it comprises between two and four perforated elongated blades (30) distributed around the rotation axis (25).

7. Rotating work tool (5) according to one of claims 1 to 6, **characterised in that** the perforated elongated blades (30) come from one same metal part.

8. Rotating work tool (5) according to one of claims 1 to 7, **characterised in that** it comprises two opposing perforated elongated blades (30) on either side of the rotation axis (25).

9. Rotating work tool (5) according to claim 8, **characterised in that** it is in the shape of an 8.

10. Rotating work tool (5) according to one of claims 8 or 9, **characterised in that** the two opposing perforated elongated blades (30) are tilted opposingly with respect to a plane perpendicular to the rotation axis (25).

11. Rotating work tool (5) according to one of claims 8 or 9, **characterised in that** the two opposing perforated elongated blades (30) are tilted opposingly with respect to a plane perpendicular to the rotation axis (25) with an angle of between 5 and 15° with respect to said plane.

12. Rotating work tool (5) according to one of claims 1 to 11, **characterised in that** each additional perforation (36) has a rounded geometry.

13. Household electrical appliance work container (4) to carry out food and/or cosmetic preparations, comprising a bottom (24) wherein is mounted a support axis (9), mobile in rotation and carrying a rotating work tool (5), **characterised in that** the rotating work tool (5) conforms with one of claims 1 to 12.

14. Household electrical appliance to carry out food and/or cosmetic preparations, comprising a casing (1) supporting a work container (4) receiving a rotating work tool (5), the casing (1) containing a motor (2) to drive the rotating work tool (5), **characterised in that** the rotating work tool (5) conforms with one of claims 1 to 12.
